# EUROPEAN PATENT SPECIFICATION

(11) **EP 2 458 662 B1**
(45) Date of publication and mention of the grant of the patent: **24.04.2019**
(21) Application number: 10802382.1
(22) Date of filing: 14.05.2010
(51) Int. Cl.: H01M 4/58, H01M 4/04, H01M 10/36, H01M 4/133, H01M 4/1393, H01M 4/587, H01M 10/052, H01M 4/02

(54) **ANODE MATERIAL FOR A LITHIUM SECONDARY BATTERY, METHOD FOR MANUFACTURING SAME, AND LITHIUM SECONDARY BATTERY INCLUDING THE ANODE MATERIAL**
ANODENMATERIAL FÜR LITHIUMSEKUNDÄRBATTERIE, VERFAHREN ZUR DEREN HERSTELLUNG UND LITHIUMSEKUNDÄRBATTERIE MIT DEM ANODENMATERIAL
MATÉRIAU D'ANODE POUR UNE BATTERIE RECHARGEABLE AU LITHIUM, PROCÉDÉ DE FABRICATION ASSOCIÉ, ET BATTERIE RECHARGEABLE AU LITHIUM COMPRENANT LE MATÉRIAU D'ANODE

(30) Priority: 23.07.2009 KR 20090067314
(43) Date of publication of application: 30.05.2012
(73) Proprietor: Power Carbon Technology Co., Ltd., Gyeongsangbuk-do 39422 (KR)
(72) Inventor: LEE, Sang Ick, Seoul 134-758 (KR); JEON, Taehyun, Seoul 134-030 (KR); LEE, Ung Ju, Daejeon 305-728 (KR); SEUNG, Do Young, Seoul 137-070 (KR)
(74) Representative: Nobbe, Matthias
(86) International application number: PCT/KR2010/003056
(87) International publication number: WO 2011/010789

(56) References cited:
- WO-A1-2008/126800
- WO-A1-2009/022664
- JP-A- 2002 270 169
- JP-A- 2005 302 338
- JP-A- 2007 172 901
- JP-A- 2009 076 209
- US-A1- 2005 064 282

## Description

### Technical Field

The present invention relates to a battery, more particularly to a negative active material for a rechargeable lithium battery, a method of manufacturing the same, and a rechargeable lithium battery having the same.

### Background Art

Development of portable electronic equipment, such as mobile phones, notebook computers, or the like, is bringing about a rapidly growing demand for a rechargeable battery to be used as a power source. Recently, a rechargeable battery has been practically used as a power source of a hybrid electric vehicle (HEV) and an electric vehicle. Accordingly, extensive studies on rechargeable batteries are being conducted to meet various demands. In particular, there is a trend towards a higher demand for a rechargeable lithium battery having a high energy density and a high discharge voltage and output.

A rechargeable lithium battery to be used for an electric vehicle or the like may need to have a high energy density and to exhibit high output in a short time and can be used for at least 10 years under severe conditions such as when charging and discharging by a high current are repeated in a short time. Thus, it is necessary for the battery to have characteristics of remarkably superior output and long life when compared to a conventional small-sized rechargeable lithium battery.

However, when lithium metal is used for a negative electrode of a rechargeable battery, reversibility of the lithium metal is not good. In detail, lithium ions present in an electrolyte are electrodeposited on the lithium metal, which is the negative electrode, in a charging process, but only a portion of the electrodeposited lithium ions are dissolved back in the electrolyte during a discharging process. That is, since only a portion of the electrodeposited lithium ions in the charging process are reused in the discharging process, a relatively large amount of lithium is needed to prevent a decrease in capacity from occurring. Further, lithium is electrodeposited in a dendrite or aciform-shaped surface structure on a surface of the lithium metal. Here, lithium grown into an dendrite shape might penetrate a separator and come in contact with a positive electrode, causing a short circuit inside a battery. The short circuit may bring about drastic reaction resulting in the battery exploding. Also, since lithium grows into the dendrite shape actively with a higher current density, a battery needing high speed charging may not use lithium metal.

### Disclosure of Invention

### Technical Goals

An aspect of the present invention provides a negative active material for a rechargeable lithium battery which realizes a long life and a high output, a method of manufacturing the same, and a rechargeable lithium battery having the same.

### Technical solutions

According to an aspect of the present invention, there is provided a negative active material for a rechargeable lithium battery including an amorphous carbon material, having a tap density of 0.7 to 1.5 g/cm³ and an angle of repose of 15 to 55 degrees, wherein fine particles having a particle size of 2 µm or less are present at 5% or less of the total amount of the negative active material, and improves output of the rechargeable lithium battery.

According to an aspect of the present invention, there is provided a rechargeable lithium battery including a negative electrode, a positive electrode, and an electrolyte disposed between the negative electrode and the positive electrode. Here, the negative electrode includes the negative active material.

According to an aspect of the present invention, there is provided a negative active material for a rechargeable lithium battery including amorphous carbon powder obtained by carbonizing petroleum coke, coal coke, coal pitch, petroleum pitch, mesophase pitch, mesocarbon microbeads, and vinyl chloride resins at a temperature in the range of 500 to 2500 °C. According to an aspect of the present invention, there is provided a method of manufacturing a negative active material for a rechargeable lithium battery including: grinding, into a powder form, a raw material precursor of at least one selected from the group consisting of petroleum coke, coal coke, coal pitch, petroleum pitch, mesophase pitch, mesocarbon microbeads, and vinyl chloride resins at a temperature in the range of 500 to 2500 °C.

According to an aspect of the present invention, there is provided a method of manufacturing a negative active material for a rechargeable lithium battery including: grinding, into a powder form, a raw material precursor of at least one selected from the group consisting of petroleum coke, coal coke, coal pitch, petroleum pitch, mesophase pitch, mesocarbon microbeads, and vinyl chloride resins; and heating the ground raw material precursor at a temperature in the range of 500 to 2500 °C.

### Advantageous Effect

According to exemplary embodiments of the present invention, since a negative active material has a high tap density, and electrode density is improved, thereby resulting in increase in a capacity of a rechargeable lithium battery. Also, the negative active material has a small angle, thus enhancing output of the rechargeable lithium battery and controlling deterioration in life characteristics.

### Best Mode for Carrying Out the Invention

Hereinafter, a negative active material for a rechargeable lithium battery according to an exemplary embodiment of the present invention, a method of manufacturing the same, and a rechargeable lithium battery having the same will be described in detail.

The negative active material for the rechargeable lithium battery according to the exemplary embodiment of the present invention includes an amorphous carbon material. A rechargeable lithium battery has high-rate of charging and excellent cycle characteristics, due to the amorphous carbon material.

The amorphous carbon material may include any one of soft carbon and hard carbon, preferably soft carbon.

Soft carbon is a carbon material which exists in a process of graphitizing raw material precursors and has a partly hexagonal regular arrangement (hexagonal network structure). Soft carbon may be obtained by partly graphitizing the raw material precursors via thermal treatment a predetermined temperature under an air or inert gas atmosphere at a temperature in the range of 500 to 2500 °C. In this process, grinding and/or crushing may be employed as necessary. For example, the negative active material may be produced by grinding a raw material precursor into powder and heating the ground raw material precursor at a temperature in the range of 500 to 2500 °C.

The grinding and/or crushing may be carried out by milling the raw material precursor using mills, such as a ball mill, an attrition mill, a vibration mill, a disk mill, a jet mill and a rotor mill. The milling may be carried out by a dry process, a wet process or a combination of dry and wet processes. In the grinding and/or crushing, a grinding rate, pressure and time may be changed to adjust an average diameter of particles and particle size distribution. Thus, the average particle size and particle size distribution of the negative active material may be determined in the grinding and/or crushing.

Raw material precursors of soft carbon may include for example, petroleum coke, coal coke, coal pitch, petroleum pitch, mesophase pitch, mesocarbon microbeads, vinyl chloride resins, or the like, although not limited thereby, which may be used alone or as combinations thereof.

The negative active material may have a tap density of 0.7 to 1.5 g/cm³. The tap density denotes a mass of a powder formed of particles per volume, which refers to a density when gaps between particles are filled by regular tapping or applying vibrations. The tap density is affected by factors, such as particle size distribution, water content, particle shapes, cohesiveness, or the like. The tap density may be used to predict fluidity and compressibility of the material. The tap density may be measured based on ASTM D4781 using TD = W/V (TD: tap density, W: weight of sample in grams (g), V: volume of sample after tapping). When the tap density is 0.7 g/cm³ or greater, a large amount of the negative active material may be secured at a negative electrode of the rechargeable lithium battery according to the present embodiment when compared to a conventional battery having the same volume, and a non-aqueous electrolyte may evenly infiltrate the negative active material. When the tap density is less than 0.7 g/cm³, the amount of the negative active material per volume of the rechargeable lithium battery relatively decreases, resulting in decrease in capacity per volume of the rechargeable lithium battery. When the tap density is greater than 1.5 g/cm³, compression is not properly performed in manufacturing an electrode, so that the negative active material may be separated from a current collector, problems in processes may occur in that it takes a long time and is difficult to inject an electrolyte, and high-rate charging and discharging characteristics may deteriorate.

The negative active material may have an angle of repose of 15 to 55 degrees. The angle of repose refers to an angle between a free surface of a layer of still sedimentary particulate material and a horizontal plane. The angle of repose becomes wider as constituent particles have a greater particle size and a higher water content, are more angulated and more cohesive, and include less fine powder. With a smaller angle of repose, particulate material has good flowability. The angle of repose may be measured, for example, directly on the negative active material deposited on a laboratory dish having a radius of r via discharge from a funnel, or using the measured height of the deposited layer. When the angle of repose is 55 degrees or less, wetting of the negative active material may be optimized in attaching a negative compound to a negative current collector. Thus, the negative compound may be uniformly attached without separation or sinking of the negative active material. Further, stripping of the negative compound is prevented and partial concentration of electrode reaction is controlled, thereby controlling deterioration in output and life of the rechargeable lithium battery. However, when the angle of repose is less than 15 degrees or greater than 55 degrees, the active material is not properly mixed with a conductive material in the negative compound due to low cohesiveness between the negative active material, the conductive material, and a binder, resulting in deterioration in output, or the electrolyte not being sufficiently absorbed due to narrow gaps in the negative active material, thus drastically decreasing discharge output.

The negative active material may have a Carr's index in the range of 15 to 30. The Carr's index denotes a value obtained from C = 100 * ((V₀-V_{f})/V₀) (C: Carr's index, V₀: volume of sample before tapping, V_{f}: volume of sample after tapping). When manufacturing a negative electrode of the rechargeable lithium battery, for example, when mixing the negative active material, the conductive material, and the binder, free-flowing particles move independently, whereas non-free flowing particles move with attraction. Here, if attraction is greater than gravitation, separation of particles does not occur in the mixing process by gravitation. Since a mixture including various sizes of particles involves remarkable separation due to gravitation, non-free flowing particles are favorable to preparation of the negative active material. When the Carr's index is less than 15, mixing is not uniformly performed due to weak attraction between the negative active material, the conductive material and the binder. When the Carr's index is greater than 30, a problem occurs in that particles of a positive compound may be sunken only by leaving the compound after mixing. Further, when applied to a current collector, particles agglomerate in a stirring coating solution, making it difficult to perform even coating and generating uneven parts partly on a surface of an electrode.

The negative active material may have a coefficient of friction of in the range of 0.03 to 1.0, preferably in the range of 0.02 to 0.90, and more preferably in the range of 0.05 to 0.85. Generally, a coefficient of friction varies on surface roughness of particles, shape irregularity, or the like. Due to a rough surface of the negative active material, an area in which undesired side reactions may occur in a reaction with the electrolyte increases, so that irreversible capacity grows, resulting in deterioration in capacity characteristics. Further, when the coefficient of friction is greater than 1.0 in a compressing process in which a strong vertical load is applied in manufacturing the electrode, uniform application is not carried out and stripping may occur. When the coefficient of friction is less than 0.03, the negative active material is very round and does not have micro-pores, and thus there are remarkably fewer pores for lithium ions to couple with, thus decreasing capacity.

The negative active material may have a true density of 1.7 to 2.3 g/cm³. When the true density is less than 1.7 g/cm³, the negative active material contains a great number of gaps inside and has a large surface area, so that cations may not be intercalated on and in the negative active material but be eluted. Here, the eluted cations deteriorate capacity and cycle characteristics. However, when the true density is greater than 2.3 g/cm³, the negative active material includes fewer gaps inside, so that the electrolyte does not infiltrate into the electrode, thereby reducing the capacity of the rechargeable lithium battery.

The negative active material may have a crystal length (L_{c}) of the negative active material in a d (002) direction of 10 to 100 angstroms (Å) as a result of x-ray diffraction (XRD) analysis. A long crystal length in the d (002) direction means that the amorphous carbon material is considerably graphitized, while a short crystal length in the C-axial direction means that the amorphous carbon materials are less graphitized and thus be strongly amorphous. When the crystal length of the negative active material in the d (002) direction is less than 10 Å, a greater amount of conductive materials are needed in manufacturing the electrode due to a low electrical conductivity of the negative active material. In this respect, the negative active material is not suitable for a high-capacity negative active material. When the crystal length of the negative active material in the d (002) direction is greater than 100 Å, proper life expectancy is exhibited due to good electrical conductivity. However, an area in which lithium ions are bonded to both sides of a graphene layer is remarkably small, and thus charging and discharging characteristics are exhibited only by intercalation/deintercalation between layers, causing decrease in capacity.

Further, as a result of the XRD analysis of the negative active material, a crystal distance (between crystal planes) of the negative active material in the d (002)-axial direction may be, for example, in the range of 3.35 to 3.65 Å, preferably in the range of 3.40 to 3.55 Å.

The negative active material having a crystal distance (between crystal planes) in the range of 3.35 to 3.65 Å in the d (002)-axial direction has a feature in that the amorphous carbon material has a partly hexagonal regular arrangement (hexagonal network structure).

The negative active material includes spherical or oval particles. The negative active material may include spherical or oval particles having a smaller specific surface area than scale-shaped graphite. Thus, reactivity between the negative active material and the electrolyte is low, thereby improving primary cycle efficiency.

The negative active material may have an average particle size in the range of 5 to 15 micrometers (µm). When the particles have a large average particle size, it is difficult to form a high-density negative and to obtain high output. In particle size distribution of the negative active material, fine particles having a particle size of 2 µm or less may be present at 5% or less of the total amount of the negative active material, which is the reason the wider the angle of repose is the more fine particles are in the negative active material. In the particle size distribution of the negative active material, d (0.9) may have a particle size in the range of 15 to 25 µm. The tap density varies on shapes of the negative active material, shape distribution, particle size, particle size distribution, flowability, porosity, water content, and surface properties, wherein the tap density decreases when the particle size of d (0.9) is greater than 25 µm.

As described in the foregoing, since the negative active material is formed of an amorphous carbon material, the rechargeable lithium battery may improve in capacity and cycle characteristics. Further, since the negative active material has a high tap density, output of the rechargeable lithium battery may be improved. In addition, due to a low angle of repose of the negative active material, deterioration in output and life of the rechargeable lithium battery may be controlled. The Carr's index, coefficient of friction, true density, crystal length in the d (002) direction, particle shape, average particle size and particle size distribution of the negative active material may be optimized, and thus a long life and high output of the rechargeable lithium battery may be further improved.

The rechargeable lithium battery according to the present embodiment includes a negative electrode, a positive electrode and an electrolyte disposed on a substrate. The rechargeable lithium battery may further include a negative current collector and a positive current collector disposed on the substrate. In addition, the rechargeable lithium battery may further include a separator. Here, the components may be stacked in any order as long as the rechargeable lithium battery operates properly.

The negative electrode may be manufactured as follows: a slurry for manufacturing a negative electrode is prepared by mixing the negative active material according to the present embodiment, a conductive material and a binder and the slurry for manufacturing the negative electrode is deposited and dried on the negative current collector. The negative electrode includes the negative active material according to the present embodiment, and thus the rechargeable lithium battery may have a long lifespan and high output characteristics.

The positive electrode may be manufactured as follows: a slurry for manufacturing a positive electrode is prepared by mixing a positive active material, a conductive material and a binder and the slurry for manufacturing the positive electrode is deposited and dried on the positive current collector.

As the positive active material, any material known in the art may be used, without being particularly limited. For example, LiCoO₂, LiMn₂O₄, LiNiO₂, LiFePO₄, LiNiVO₄, LiCoMnO₄, LiCo_{1/3}Ni_{1/3}Mn_{1/3}O₂, V₂O₅, MnO₂, MoO₃ and the like, which may reversibly intercalate/deintercalate lithium, may be used alone or as combinations.

As conductive materials used for manufacturing the negative electrode and the positive electrode, any material known in the art may be used, without being particularly limited. For example, carbons, such as carbon black, acetylene black, thermal black, channel black, furnace black, graphite, and the like, or metal powders may be used. As binders used for manufacturing the negative electrode and the positive electrode, any material known in the art may be used, without being particularly limited. For example, polyvinylidene fluoride (PVDF) may be used.

The electrolyte is disposed between the positive electrode and the negative electrode and serves as a medium that transports lithium ions between the positive electrode and the negative electrode. The electrolyte is not particularly limited but may be a non-aqueous electrolyte. Examples of the non-aqueous electrolyte may include propylene carbonate, ethylene carbonate, butylene carbonate, chloroethylene carbonate, dimethyl carbonate, diethyl carbonate, ethylmethyl carbonate, 1,1-dimethoxyethane, 1,2-dimethoxyethane, 1,2-diethoxyethane, γ-butyrolactone, tetrahydrofuran, 2-methyltetrahydrofuran, 1,3-dioxolane, 4-methyl-1,3-dioxolane, anisole, diethyl ether, sulfolane, methyl sulfolane, acetonitrile, chloronitrile, propionitrile, trimethyl borate, tetramethyl silicate, nitromethane, dimethylformamide, N-methylpyrrolidone, ethyl actetate, trimethyl orthoformate, nitrobenzene, benzoyl chloride, benzoyl bromide, tetrahydrothiophene, dimethyl sulfoxide, 3-methyl-2-oxazolidinone, ethylene glycol, sulfite, dimethyl sulfite, and the like, which may be used alone or as combinations. Inorganic or organic solid electrolytes may be used as the electrolyte. Examples of the inorganic solid electrolytes may include Li₂O-B₂O₃, Li₂O-V₂O₅-SiO₂, Li₂SO₄-Li₂O-B₂O₃, Li₃PO₄, LiPON, LiBON, and the like, which may be used alone or as combinations thereof. Examples of the organic solid electrolytes may include polyethylene derivatives, polyethylene oxide derivatives, polypropylene oxide derivatives, phosphate polymers, poly-agitation lysine, polyester sulfide, polyvinyl alcohol, polyvinylidene fluoride, and the like, which may be used alone or as combinations thereof.

The negative current collector is electrically connected to the negative electrode. The negative current collector may include any material which does not cause chemical changes to the rechargeable lithium battery and has a high conductivity. For example, precious metals, such as platinum (Pt), gold (Au), copper (Cu), Hastelloy, indium tin oxide (ITO), and the like, heat resisting steel, conductive oxide films, and the like may be used as the negative current collector. As necessary, fine uneven parts may be formed on a surface of the negative current collector to increase adhesion of the negative active material, in various shapes including a film, sheet, foil, net, porous form, foaming form, unwoven form, or the like.

The positive current collector is electrically connected to the positive electrode. The positive current collector may include any material which does not cause the thin chemical changes to film battery and has a high conductivity. For example, precious metals, such as platinum (Pt), gold (Au), copper (Cu), Hastelloy, indium tin oxide (ITO), and the like, heat resisting steel, conductive oxide films, and the like may be used as the positive current collector. As necessary, fine uneven parts may be formed on a surface of the positive current collector to increase adhesion of the positive active material, in various shapes including a film, sheet, foil, net, porous form, foaming form, unwoven form, or the like.

The respective components constituting the rechargeable lithium battery may form one unit cell. The rechargeable lithium battery according to the present embodiment may be formed of the one unit cell, without being limited thereto. Alternatively, the rechargeable lithium battery may be formed by stacking a plurality of unit cells. The rechargeable lithium battery may have any shape selected from cylindrical, square, coin, and pouch shapes.

Hereinafter, the present invention will be described with reference to the following examples. However, it should be understood that the invention is not limited to the illustrated examples. In the following examples, negative active materials having different tap densities, angles of repose, Carr's indices and coefficients of friction are prepared by controlling carbonization conditions, particle size and shape.

### Mode for the Invention

### [Examples]

### 1. Preparation of Negative Active Material

### Example 1

Petroleum coke, which was used as an amorphous carbon material, was ground into a powder form using a dry air jet mill, so that the petroleum coke had an average particle size of 10 µm. Here, a maximum particle size was controlled to be 26 µm or less, and a minimum particle size was controlled to be 0.8 µm, using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Example 2

Petroleum coke, which was used as an amorphous carbon material, was ground into a powder form using a wet disk mill, so that the petroleum coke had an average particle size of 10 µm. Here, a maximum particle size was controlled to be 40 µm or less using a classifier, and a minimum particle size was controlled to be 0.3 µm using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Example 3

Petroleum coke, which was used as an amorphous carbon material, was ground into a powder form using a dry air jet mill, so that the petroleum coke had an average particle size of 12 µm. Here, a maximum particle size was controlled to be 40 µm or less using a classifier, and a minimum particle size was controlled to be 0.5 µm using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Example 4

Petroleum coke, which was used as an amorphous carbon material, was ground into a powder form using a dry air jet mill, so that the petroleum coke had an average particle size of 11 µm. Here, a maximum particle size was controlled to be 25 µm or less using a classifier, and a minimum particle size was controlled to be 0.8 µm using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Comparative Example 1

Petroleum coke, which was used as an amorphous carbon material, was ground into a powder form using a wet bead mill, so that the petroleum coke had an average particle size of 10 µm. Here, a maximum particle size was controlled to be 40 µm or less using a classifier, and a minimum particle size was controlled to be 1 µm. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Comparative Example 2

Petroleum coke, which was used as an amorphous carbon material, was ground into a powder form using a dry air jet mill, so that the petroleum coke had an average particle size of 9 µm. Here, a maximum particle size was controlled to be 25 µm or less using a classifier, and a minimum particle size was controlled to be 0.8 µm using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Comparative Example 3

Petroleum coke, which was used as an amorphous carbon material, was ground into a powder form using a wet disk mill, so that the petroleum coke had an average particle size of 15 µm. Here, a maximum particle size was controlled to be 40 µm or less using a classifier, and a minimum particle size was controlled to be 0.5 µm using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### Comparative Example 4

Petroleum coke, which was used as an amorphous carbon material, was ground into a powder form using a wet bead mill, so that the petroleum coke had an average particle size of 10 µm. Here, a maximum particle size was controlled to be 40 µm or less using a classifier, and a minimum particle size was controlled to be 0.3 µm using a back filter. Subsequently, the powdery petroleum coke was heated to 1100 °C at a rate of 2.5 °C/min. Then, the powdery petroleum coke was maintained at the maximum temperature for 3 hours and slowly cooled at a rate of 5 °C/min.

### 2. Manufacture of Rechargeable Lithium Battery

### Examples 5 to 8, Comparative Examples 5 to 8

Rechargeable lithium batteries according to Examples 5 to 8 and Comparative Examples 5 to 8 were manufactured by a conventionally known method using the negative active materials according to Examples 1 to 4 and Comparative Examples 1 to 4, respectively.

### 3. Measurement of Characteristics of Negative Active Material

The negative active materials prepared in the Examples 1 to 4 and Comparative Examples 1 to 4 were evaluated in terms of tap density, angle of repose, Carr's index, and coefficient of friction, and results are shown in Table 1.

The tap density was measured using a tap density analyzer (Autotap), Quantachrome Instruments, as follows. 90 ml of each negative active material was put in a 100 ml graduated cylinder and measured as to mass to 0.1 g. Then, the negative active material was tapped 3,000 times with a 3.2 mm-long stroke at 250 r/min and measured as to volume to a 1 ml gradation. Then, the tap density was calculated using these measured values and a formula for tap density. The angle of repose was measured by a Hosokawa Micron PT-S. Carr's index was obtained using the measured values used for the tap density and a formula for Carr's index. PT-S satisfied ASTM D6393-99 used to measure Carr's index of a particulate material. The coefficient of friction is a tangent value for a possible maximum angle (Φ) between a surface of a pile of powder and a horizontal plane, which was obtained from a formula of tan (Φ) = µ (coefficient of friction) after measuring the angle of repose using the Hosokawa Micron PT-S.

**[Table 1]**

| | Tap Density (g/cm³) | Angle of Repose (°) | Carr's Index | Coefficient of Friction |
|---|---|---|---|---|
| Example 1 | 0.83 | 36.0 | 17 | 0.79 |
| Example 2 | 0.9 | 32.0 | 21 | 0.68 |
| Example 3 | 0.8 | 30.7 | 15 | 0.64 |
| Example 4 | 1.1 | 42.0 | 30 | 0.87 |
| Comparative Example 1 | 0.75 | 56.0 | 12 | 1.05 |
| Comparative Example 2 | 1.0 | 59.0 | 25 | 1.07 |
| Comparative Example 3 | 0.8 | 60.0 | 15 | 1.1 |
| Comparative Example 4 | 0.65 | 40.3 | 10 | 0.84 |

### 4. Evaluation of Characteristics of Rechargeable Lithium Battery

The rechargeable lithium batteries of Examples 5 to 8 and Comparative Example 5 to 8 were subjected to the following experiment. First, the batteries were charged with a constant current and a constant voltage at a 5 hour rate (0.2 C) and room temperature (25 °C), discharged to a cutoff voltage of 1.5 V at a 5 hour rate (0.2 C), and then charged again under the same conditions. Further, in order to evaluate deterioration in output due to charge/discharge cycles, the batteries were suspended for 24 hours at room temperature, charged with a constant current to a set voltage of 5 mV at 50 °C, and then repeatedly charged and discharged to a cutoff voltage of 1.5 V at a 2 hour rate (0.5 C). After 100 cycles, outputs of the batteries were measured in the same manner as initial outputs, and a ratio of output after 100 cycles to initial output was calculated as a percentage, and defined as a capacity retention (cycle retention). Discharge output was measured by charging the batteries with a constant current to 5 mV at a 2 hour rate (0.5 C) and then discharging to a cutoff voltage of 1.5 V at 5 C. A ratio of output at 5 C to output at a 5 hour rate (0.2 C) was calculated as a percentage, and defined as discharge output. Output and retention results measured at room temperature are illustrated in Tables 2 and 3.

**[Table 2]**

| | Carr's Index | Coefficient of Friction | Coulombic Efficiency (%) |
|---|---|---|---|
| Example 5 | 17 | 0.79 | 85.2 |
| Example 6 | 21 | 0.68 | 84.5 |
| Comparative Example 5 | 12 | 1.05 | 74.8 |

Referring to Table 2, Examples 5 and 6 have superior Coulombic efficiency to Comparative Example 5. When manufacturing the rechargeable lithium battery according to Comparative Example 1, uneven parts are generated in coating and rolling an electrode, making it difficult to form an even coating. When Carr's index is low, coating is not uniformly realized, which causes deterioration in Coulombic efficiency of an electrode.

**[Table 3]**

| | Tap Density (g/ml) | Angle of Repose (degree) | Initial Capacity (mAh/ml) | Discharge Output (%) | 100 cycle Retention (%) |
|---|---|---|---|---|---|
| Example 7 | 0.8 | 30.7 | 200 | 56.2 | 93 |
| Example 8 | 1.1 | 42.0 | 264 | 49.9 | 89.8 |
| Comparative Example 6 | 1.0 | 59.0 | 227 | 34.3 | 74.8 |
| Comparative Example 7 | 0.8 | 60.0 | 180 | 28.2 | 77.8 |
| Comparative Example 8 | 0.65 | 40.3 | 156 | 50.7 | 88.9 |

Referring to Table 3, comparing Example 7 and Comparative Example 7 having the same tap density, Example 7 has 28% higher discharge efficiency than Comparative Example 7, and Example 7 has a higher 100 cycle retention than Comparative Example 7. Further, comparing Example 8 and Comparative Example 8 having similar angles of repose, Example 8 has an initial capacity 108 mAh/ml higher than Comparative Example 8. Therefore, it is predicted that a difference in output per volume appears more remarkably in a large-sized battery than in a small-sized battery. In Comparative Examples 6 and 7 using the negative active materials having an angle of repose of greater than 55 degrees, the electrolyte in the negative active materials is non-uniformly distributed due to narrow gaps between particles, resulting in remarkable deterioration in discharge output. Also, Comparative Examples 6 and 7 have 100 cycle retentions of 74.8% and 77.8%, respectively, since electrode reactions are concentrated on an area in which part of the electrolyte is present to cause continuous increase in irreversible capacity, thereby deteriorating cycle characteristics of the batteries.

## Claims

1. A negative active material for a rechargeable lithium battery comprising an amorphous carbon material, having a tap density in the range of 0.7 to 1.5 g/cm³, **characterized in that** said negative active material has an angle of repose as specified in the specification in the range of 15 to 55 degrees, wherein fine particles having a particle size of 2 µm or less are present at 5% or less of the total amount of the negative active material.

2. The negative active material of claim 1, wherein the negative active material has a Carr's index as specified in the specification in the range of 15 to 30.

3. The negative active material of claim 1, wherein the negative active material has a coefficient of friction as specified the specification in the range of 0.03 to 1.0.

4. The negative active material of claim 1, wherein the negative active material has a true density in the range of 1.7 to 2.3 g/ cm³.

5. The negative active material of claim 1, wherein the negative active material has a crystal length in a d (002)-axial direction in the range of 10 to 100·10⁻¹⁰ m (10 to 100 Å).

6. The negative active material of claim 1, wherein the negative active material has a crystals distance between crystal planes in a d (002)-axial direction in the range of 3.35 to 3.65·10⁻¹⁰ m (3.35 to 3.65 Å).

7. The negative active material of claim 1, wherein the negative active material comprises spherical or oval particles having an average particle size in the range of 5 to 15 µm.

8. The negative active material of claim 1, wherein the negative active material has a particle size of d (0.9) in the range of 15 to 25 µm in particle size distribution.

9. The negative active material of claim 1, wherein the amorphous carbon material comprises soft carbon.

10. The negative active material of claim 9, wherein a raw material precursor of the soft carbon comprises at least one selected from the group consisting of petroleum coke, coal coke, coal pitch, petroleum pitch, mesophase pitch, mesocarbon microbeads, and vinyl chloride resins.

11. A rechargeable lithium battery comprising a negative electrode, a positive electrode, and an electrolyte disposed between the negative electrode and the positive electrode, wherein the negative electrode comprises the negative active material of claim 1.

12. A method of manufacturing a negative active material for a rechargeable lithium battery according to claim 1 comprising:
grinding, into a powder form, a raw material precursor of at least one selected from the group consisting of petroleum coke, coal coke, coal pitch, petroleum pitch, mesophase pitch, mesocarbon microbeads, and vinyl chloride resins; and heating the ground raw material precursor at a temperature in the range of 500 °C to 2500 °C.

## Patentansprüche

1. Negatives aktives Material für eine wiederaufladbare Lithiumbatterie, umfassend ein amorphes Kohlenstoffmaterial mit einer Klopfdichte im Bereich von 0,7 bis 1,5 g/cm³, **dadurch gekennzeichnet, dass** das negative aktive Material einen Schüttwinkel, wie in der Beschreibung im Bereich von 15 bis 55 Grad angegeben, aufweist, wobei feine Partikel mit einer Partikelgröße von 2 µm oder weniger bei 5% oder weniger der Gesamtmenge des negativen aktiven Materials vorhanden sind.

2. Negatives aktives Material nach Anspruch 1, wobei das negative aktive Material einen wie in der Beschreibung angegebenen Carr'schen Index im Bereich von 15 bis 30 aufweist.

3. Negatives aktives Material nach Anspruch 1, wobei das negative aktive Material einen wie in der Beschreibung angegebenen Reibungskoeffizienten im Bereich von 0,03 bis 1,0 aufweist.

4. Negatives aktives Material nach Anspruch 1, wobei das negative aktive Material eine Reindichte im Bereich von 1,7 bis 2,3 g/cm³ aufweist.

5. Negatives aktives Material nach Anspruch 1, wobei das negative aktive Material eine Kristalllänge in einer d (002)-Axialrichtung im Bereich von 10 bis 100·10⁻¹⁰ m (10 bis 100 Å) aufweist.

6. Negatives aktives Material nach Anspruch 1, wobei das negative aktive Material einen Kristallabstand zwischen Kristallebenen in einer d (002)-Axialrichtung im Bereich von 3,35 bis 3,65·10⁻¹⁰ m (3,35 bis 3,65 Å) aufweist.

7. Negatives aktives Material nach Anspruch 1, wobei das negative aktive Material kugelförmige oder ovale Partikel mit einer durchschnittlichen Partikelgröße im Bereich von 5 bis 15 µm umfasst.

8. Negatives aktives Material nach Anspruch 1, wobei das negative aktive Material eine Partikelgröße von d (0,9) im Bereich von 15 bis 25 µm in der Partikelgrößenverteilung aufweist.

9. Negatives aktives Material nach Anspruch 1, wobei das amorphe Kohlenstoffmaterial weichen Kohlenstoff umfasst.

10. Negatives aktives Material nach Anspruch 9, wobei ein Rohstoffvorläufer des weichen Kohlenstoffs mindestens eines umfasst, ausgewählt aus der Gruppe bestehend aus Petrolkoks, Kohlekoks, Kohlepech, Petrolpech, Mesophasenpech, Mesokohlenstoffmikroperlen und Vinylchloridharzen.

11. Wiederaufladbare Lithiumbatterie, umfassend eine negative Elektrode, eine positive Elektrode und einen Elektrolyten, der zwischen der negativen Elektrode und der positiven Elektrode angeordnet ist, wobei die negative Elektrode das negative aktive Material nach Anspruch 1 umfasst.

12. Verfahren zur Herstellung eines negativen aktiven Materials für eine wiederaufladbare Lithium-Batterie nach Anspruch 1, umfassend:
Mahlen eines Rohstoffvorläufers von mindestens einem, ausgewählt aus der Gruppe bestehend aus Petrolkoks, Kohlenkoks, Kohlenpech, Kohlenpech, Petrolpech, Mesophasenpech, Mesokohlenstoffmikroperlen und Vinylchloridharzen, in eine Pulverform; und Erwärmen des gemahlenen Rohstoffvorläufers auf eine Temperatur im Bereich von 500 °C bis 2500 °C.

## Revendications

1. Matériau actif négatif pour une batterie rechargeable au lithium comprenant un matériau de carbone amorphe, ayant une masse volumique après tassement dans la plage comprise entre 0,7 et 1,5 g/cm³, **caractérisé en ce que** ledit matériau actif négatif possède un angle d'éboulement tel que spécifié dans la spécification dans la plage comprise entre 15 et 55 degrés, dans lequel des particules fines ayant une taille de particule inférieure ou égale à 2 µm sont présentes à 5 % ou moins de la quantité totale du matériau actif négatif.

2. Matériau actif négatif selon la revendication 1, dans lequel le matériau actif négatif possède un indice de Carr tel que spécifié dans la spécification dans la plage comprise entre 15 et 30.

3. Matériau actif négatif selon la revendication 1, dans lequel le matériau actif négatif possède un coefficient de friction tel que spécifié dans l'espace question dans la plage comprise entre 0,03 et 1,0.

4. Matériau actif négatif selon la revendication 1, dans lequel le matériau actif négatif possède une densité réelle dans la plage comprise entre 1,7 et 2,3 g/cm³.

5. Matériau actif négatif selon la revendication 1, dans lequel le matériau actif négatif possède une longueur de cristal dans une direction axiale d (002) dans la plage comprise entre 10 et 100 x 10⁻¹⁰ m (entre 10 et 100 Å).

6. Matériau actif négatif selon la revendication 1, dans lequel le matériau actif négatif possède une distance de cristaux entre des plans de cristal dans une direction axiale d (002) dans la plage comprise entre 3,35 et 3,65 x 10⁻¹⁰ m (entre 3,35 et 3,65 Å).

7. Matériau actif négatif selon la revendication 1, dans lequel le matériau actif négatif comprend des particules sphériques ou ovales ayant une taille de particule moyenne dans la plage comprise entre 5 et 15 µm.

8. Matériau actif négatif selon la revendication 1, dans lequel le matériau actif négatif comporte une taille de particule de d (0,9) dans la plage comprise entre 15 et 25 µm en termes de répartition de taille de particule.

9. Matériau actif négatif selon la revendication 1, dans lequel le matériau amorphe de carbone comprend du carbone souple.

10. Matériau actif négatif selon la revendication 9, dans lequel un précurseur de matières premières du carbone souple comprend au moins un matériau choisi dans le groupe constitué de la coke de pétrole, de la coke de charbon, de la poix de charbon, de la poix de pétrole, de la poix mésophase, de microbilles de mésocarbone et de résines de chlorure de vinyle.

11. Batterie rechargeable au lithium comprenant une électrode négative, une électrode positive et un électrolyte disposé entre l'électrode négative et l'électrode positive, dans laquelle l'électrode négative comprend le matériau actif négatif de la revendication 1.

12. Procédé de fabrication d'un matériau actif négatif destiné à une batterie rechargeable lithium selon la revendication 1 comprenant :
le broyage, dans une forme de poudre, d'un précurseur de matières premières d'au moins un matériau choisi dans le groupe constitué de la coke de pétrole, de la coke de charbon, de la poix de houille, de la poix de pétrole, de la poix mésophase, des microbilles de mésocarbone et de résines de chlorure de vinyle ; et le chauffage du précurseur pulvérisé de matière première à une température dans la plage comprise entre 500 °C et 2500 °C.
